# EUROPEAN PATENT APPLICATION

(11) **EP 2 334 119 A1**
(43) Date of publication of application: **15.06.2011**
(21) Application number: 09817588.8
(22) Date of filing: 14.08.2009
(51) Int. Cl.: H04W 48/18, H04B 1/707, H04W 48/16

(54) **MEHOD OF SELECTING CELL AND CONTROLLER**

(30) Priority: 30.09.2008 JP 2008254376
(71) Applicant: NTT DOCOMO, INC., Chiyoda-ku Tokyo 100-6150 (JP)
(72) Inventor: MATSUTANI, Hideyuki, Chiyoda-ku, Tokyo 100-6150 (JP); OBATA, Kazunori, Chiyoda-ku, Tokyo 100-6150 (JP)
(74) Representative: HOFFMANN EITLE
(86) International application number: PCT/JP2009/064351
(87) International publication number: WO 2010/038551

(57) **Abstract**

A controller 100A includes a congestion level acquisition unit 105 to acquire a congestion level of communication traffic which is handled in each of the finite number of overlaid cells, a priority giving unit 107 to give a higher selection priority to a cell having a lower congestion level on the basis of the congestion level acquired by the congestion level acquisition unit 105, and a control unit 109 to select a cell to be allocated to a call based on the W-CDMA system, according to the selection priority given by the priority giving unit the priority giving unit 107 gives a higher selection priority to an HSDPA non-supporting cell than an HSDPA supporting cell if the congestion levels thereof are less than a predetermined threshold, and gives a same selection priority to the HSDPA non-supporting cell and the HSDPA supporting cell if the congestion levels thereof are equal to or larger than the predetermined threshold.

## Description

### TECHNICAL FIELD

The present invention relates to a cell selection method and a controller in which a cell usable only for a first communication system (a W-CDMA system) is used together with a cell usable for both the first communication system and a second communication system (an HSDPA system), and in which a cell to be allocated to a call based on the first communication system is selected from a finite number of overlaid cells.

### BACKGROUND ART

Conventionally, a W-CDMA (Wideband-Code Division Multiplex Access) system utilizing a CDMA (Code Division Multiplex Access) technique which is specified by the 3GPP (3rd Generation Partnership Project) is known as a mobile communication system (for example, non-patent document 1). Also, HSDPA (High Speed Downlink Packet Access) in which a downlink communication rate is improved has been introduced recently (for example, non-patent document 2).

Specifically, in such a mobile communication system, two communication systems of the W-CDMA system (the first communication system) and the HSDPA system (the second communication system) are used together. The mobile communication system provides a service area which is configured by two-dimensionally arranging areas called sectors. In addition, such a mobile communication system uses multiple carrier frequencies. In other words, a cell is configured using a sector and a carrier frequency as a unit, and multiple cells are arranged in an overlapping manner (overlaid) in the same sector. Furthermore, in such a mobile communication system, a cell supporting only the W-CDMA system is used together with a cell supporting both the W-CDMA system and the HSDPA system.

In the W-CDMA system, when a mobile station or the like makes a call, any cell is selected from a finite number of cells included in the sector where the call is made, and any spreading code selected from a finite number of spreading codes for the cell is allocated to the call. In addition, when a communication started along with the call is finished, the allocated spreading code is released.

On the other hand, in the HSDPA system, multiple spreading codes selected from a finite number of spreading codes for each cell are reserved in advance for the HSDPA system. For a call based on the HSDPA system, a cell supporting the HSDPA system is selected from the finite number of cells included in the sector where the call is made. In the selected cell, a needed number of spreading codes from among the spreading codes reserved in advance are allocated adaptively according to a communication quality (for example, a desired communication rate) required by the call.

As described above, in the mobile communication system in which the W-CDMA system and the HSDPA system are used together, an increase in the number of spreading codes allocated to the HSDPA system enables the entire mobile communication system to improve throughput by a higher communication rate and a lower delay of communication signals as well as to reduce cost by a higher efficiency.

### PRIOR ART DOCUMENTS

### NON-PATENT DOCUMENTS

NON-PATENT DOCUMENT 1: "3GPP TS 21.101 V7.2.0 Technical Specification Group Services and System Aspects; Technical Specifications and Technical Reports for a UTRAN-based 3GPP system (Release 7)", 3GPP, June, 2008.
NON-PATENT DOCUMENT 2: "3GPP TS 25.308 V8. 2.0 Technical Specification Group Radio Access Network; High Speed Downlink Packet Access (HSDPA); Overall description; Stage 2 (Release 8)", 3GPP, May, 2008.

### SUMMARY OF THE INVENTION

However, the conventional methods have the following problem. That is, when a call based on the W-CDMA system is made and a spreading code for a cell supporting both the HSDPA system and the W-CDMA system is allocated to the call, the spreading code usable for a call based on the HSDPA system is consumed in the cell. Thus, the throughput of calls based on the HSDPA system is decreased in the cell.

On the other hand, in order to avoid such a situation, it is also conceivable that a spreading code for a cell supporting only the W-CDMA system is preferentially allocated to a call based on the W-CDMA system when the call is made. However, when the number of calls based on the W-CDMA system is increased within the same sector, the calls based on the W-CDMA are allocated concentratedly to a cell supporting only the W-CDMA system among a finite number of cells. For this reason, interference among users within the cell supporting only the W-CDMA system is increased. Consequently, there arises other problems that a voice quality in a call based on the W-CDMA is deteriorated and that the occurrence of communication disconnection is increased.

To address the problem, the present invention is made in view of the foregoing trade-off situations. Accordingly, an objective of the present invention is to provide a cell selection method and a controller allowing a mobile communication system, using a code division multiple access system in which multiple communication systems each having a different method of allocating a spreading code are used together, to improve the entire throughput while preventing deterioration in voice quality and disconnection of communications.

To solve the aforementioned problem, the present invention has the following features. The first feature of the present invention is summarized in that a cell selection method in which a first communication system in which a spreading code selected from a finite number of spreading codes is allocated every time a call is made by a radio communication device included in a mobile communication system using the finite number of spreading codes for a code division multiple access, is used together with a second communication system in which a plurality of spreading codes selected from the finite number of spreading codes are allocated in advance as reserved spreading codes and a number of the spreading codes which are allocated to the call at regular time intervals from the reserved spreading codes is changed according to a required communication quality, a finite number of cells using different carrier frequencies are overlaid in a geographically same area, and a first cell type usable only for the first communication system and a second cell type usable for both the first communication system and the second communication system are used together as types of the cells, and a cell to be allocated to a call based on the first communication system is selected from the finite number of overlaid cells, the cell selection method comprising the steps of: acquiring a congestion level of communication traffic which is handled in each of the finite number of overlaid cells; giving a higher selection priority to a cell having a lower congestion level on the basis of the congestion level acquired in the step of acquiring the congestion level; and selecting a cell to be allocated to a call based on the first communication system, according to the selection priority, wherein in the step of giving the selection priority, a higher selection priority is given to a cell of the first cell type than a cell of the second cell type if the congestion levels thereof are less than a predetermined threshold, and a same selection priority is given to a cell of the first cell type and a cell of the second cell type if the congestion levels thereof are equal to or larger than the predetermined threshold.

The second feature of the present invention relates to the first feature and is summarized in that in the step of selecting the cell, if there is a plurality of cells having the same selection priority, a selection priority is given to a cell in ascending order of a total number of the spreading codes being used by a call in communication based on the first communication system and the reserved spreading codes allocated to the second communication system.

The third feature of the present invention relates to the first feature and is summarized in that in the step of acquiring the congestion level, the congestion level is determined by using the predetermined threshold, a low congestion threshold corresponding to a low congestion level whose congestion level is lower than a predetermined congestion level corresponding to the predetermined threshold, and a high congestion threshold corresponding to a high congestion level whose congestion level is higher than the predetermined congestion level.

The fourth feature of the present invention relates to the third feature and is summarized in that in the step of acquiring the congestion level, a first level determination processing is executed to determine the congestion level with the predetermined threshold and the low congestion threshold set to be equal to each other.

The fifth feature of the present invention relates to the third feature and is summarized in that in the step of acquiring the congestion level, a second level determination processing is executed to determine the congestion level with the predetermined threshold and the high congestion threshold set to be equal to each other.

The sixth feature of the present invention relates to the fourth feature and is summarized in that in the step of acquiring the congestion level, whether or not to execute the first level determination processing is determined for each cell.

The seventh feature of the present invention relates to the fifth feature and is summarized in that in the step of acquiring the congestion level, whether or not to execute the second level determination processing is determined for each cell.

The eighth feature of the present invention is summarized in that a controller in which a first communication system (W-CDMA system) in which a spreading code selected from a finite number of spreading codes is allocated every time a call is made by a radio communication device (mobile station 300A) included in a mobile communication system (mobile communication system 1) using the finite number of spreading codes for a code division multiple access, is used together with a second communication system (HSDPA system) in which a plurality of spreading codes selected from the finite number of spreading codes are allocated in advance as reserved spreading codes and a number of the spreading codes which are allocated to the call at regular time intervals from the reserved spreading codes is changed according to a required communication quality, a finite number of cells (cells 410 to 440) using different carrier frequencies (carrier frequencies f1 to f4) are overlaid in a geographically same area, and a first cell type (HSDPA non-supporting cell) usable only for the first communication system and a second cell type (HSDPA supporting cell) usable for both the first communication system and the second communication system are used together as types of the cells, and a cell to be allocated to a call based on the first communication system is selected from the finite number of overlaid cells, the controller including: a congestion level acquisition unit (congestion level acquisition unit 105) configured to acquire a congestion level of communication traffic which is handled in each of the finite number of overlaid cells; a priority giving unit (priority giving unit 107) configured to give a higher selection priority to a cell having a lower congestion level on the basis of the congestion level acquired by the congestion level acquisition unit; and a control unit (control unit 109) configured to select a cell to be allocated to a call based on the first communication system, according to the selection priority given by the priority giving unit, wherein the priority giving unit gives a higher selection priority to a cell of the first cell type than a cell of the second cell type if the congestion levels thereof are less than a predetermined threshold (determination threshold T2), and gives a same selection priority to a cell of the first cell type and a cell of the second cell type if the congestion levels thereof are equal to or larger than the predetermined threshold.

The ninth feature of the present invention relates to the eighth feature and is summarized in that if there is a plurality of cells having the same selection priority, the control unit preferentially selects a cell having the smallest total number of the spreading codes being used by a call in communication based on the first communication system and the reserved spreading codes allocated to the second communication system.

The tenth feature of the present invention relates to the eighth feature and is summarized in that the congestion level acquisition unit determines the congestion level by using the predetermined threshold, a low congestion threshold (determination threshold T1) corresponding to a low congestion level (congestion level 1) whose congestion level is lower than a predetermined congestion level (congestion level 2) corresponding to the predetermined threshold, and a high congestion threshold (determination threshold T3) corresponding to a high congestion level (congestion level 3) whose congestion level is higher than the predetermined congestion level.

The eleventh feature of the present invention relates to the tenth feature and is summarized in that the congestion level acquisition unit executes a first level determination processing of determining the congestion level with the predetermined threshold and the low congestion threshold set to be equal to each other.

The twelfth feature of the present invention relates to the tenth feature and is summarized in that the congestion level acquisition unit executes a second level determination processing of determining the congestion level with the predetermined threshold and the high congestion threshold set to be equal to each other.

The thirteenth feature of the present invention relates to the eleventh feature and is summarized in that the congestion level acquisition unit determines whether or not to execute the first level determination processing for each cell.

The fourteenth feature of the present invention relates to the twelfth feature and is summarized in that the congestion level acquisition unit determines whether or not to execute the second level determination processing for each cell.

According to the feature of the present invention, it is possible to provide a cell selection method and a controller allowing a mobile communication system, using a code division multiple access system in which multiple communication systems each having a different method of allocating a spreading code are used together, to improve the entire throughput while preventing deterioration in voice quality and disconnection of communications.

### BRIEF DESCRIPTION OF THE DRAWINGS

[Fig. 1] Fig. 1 is a schematic configuration view of an entire mobile communication system 1 according to an embodiment of the present invention.
[Fig. 2] Fig. 2 is a view showing an example of a cell configuration in a sector 400A according to the embodiment of the present invention.
[Fig. 3] Fig. 3 is a functional block diagram of a radio network controller 100A according to the embodiment of the present invention.
[Fig. 4] Fig. 4 is a view showing a relationship among a total downlink transmission power, a determination threshold, and a congestion level according to the embodiment of the present invention.
[Fig. 5] Fig. 5 is a view showing a relationship among a congestion level, a cell type, and a selection priority of cell according to the embodiment of the present invention.
[Fig. 6] Fig. 6 is a view showing an operational flow of selecting a cell to be allocated by the radio network controller 100A to a call based on the W-CDMA system according to the embodiment of the present invention.
[Fig. 7] Fig. 7 is a view showing operational example 1 of determining a congestion level according to the embodiment of the present invention.
[Fig. 8] Fig. 8 is a view showing operational example 2 of determining a congestion level according to the embodiment of the present invention.
[Fig. 9] Fig. 9 is a view showing operational example 3 of determining a congestion level according to the embodiment of the present invention.

### MODES FOR CARRYING OUT THE INVENTION

In the following, an embodiment of the present invention is described. Specifically, the description is given with regard to (1) Schematic Configuration of Entire Mobile Communication System, (2) Cell Configuration Example, (3) Functional Block Configuration of Radio Network Controller, (4) Operation of Radio Network Controller, (5) Advantageous Effects, and (6) Other Embodiments.

Note that, in the following description of the drawings, same or similar reference signs denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

### (1) Schematic Configuration of Entire Mobile Communication System

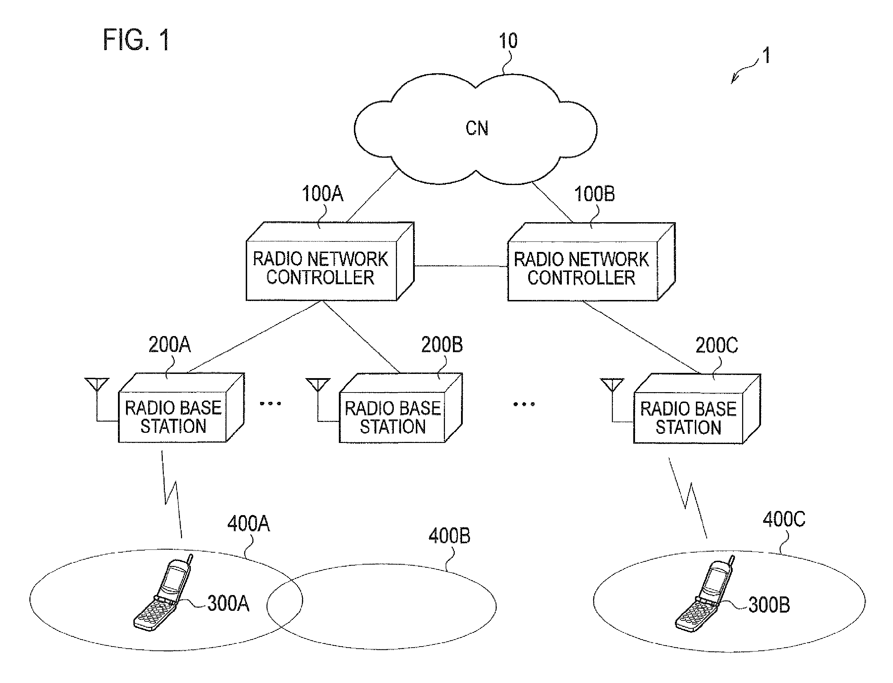

Fig. 1 is a view schematically showing the entire configuration of a mobile communication system 1 according to the embodiment. As shown in Fig. 1, the mobile communication system 1 includes a core network 10, radio network controllers 110A, 100B, radio base stations 200A to 200C, and mobile stations 300A, 300B.

The radio base stations 200A to 200C respectively cover sectors 400A to 400C as areas capable of transmitting/receiving communication signals with the mobile stations 300A, 300B. A finite number of cells having carrier frequencies different from one another are overlaid in the respective sectors 400A to 400C. In the embodiment, the description is given of an example where one radio base station covers one sector. However, one radio base station may cover multiple sectors in some configuration.

In the mobile communication system 1, a communication signal is transmitted/received using any carrier frequency between the radio base stations 200A to 200C and the mobile stations 300A, 300B. The mobile communication system 1 achieves a code division multiple access (CDMA) using a finite number of spreading codes. Specifically, the mobile communication system 1 achieves a code division multiple access of the communication signals having a same carrier frequency by using the finite number of spreading codes.

Also introduced in the mobile communication system 1 is a High Speed Downlink Packet Access system (HSDPA system) with an improved communication rate in the downlink. In other words, the mobile communication system 1 uses both the W-CDMA system (a first communication system) and the HSDPA system (a second communication system).

The W-CDMA system is used for packet communication services in a mobile station which is not compatible with a voice call or the HSDPA system. The HSDPA system is used for packet communication services such as downloading of video data or music data. In the W-CDMA system, every time a call to which the mobile stations 300A, 300B are related is made, the finite number of spreading codes, specifically, a spreading code selected from primary codes is allocated to the call.

In the HSDPA system, multiple spreading codes selected from the finite number of the primary codes are allocated in advance as reserved spreading codes. In the HSDPA system, the number of spreading codes which are allocated from the reserved spreading codes to a call is changed at regular time intervals according to a required communication quality.

The W-CDMA system uses not only the primary code but also a secondary code. The primary code is shared between the W-CDMA system and the HSDPA system, but the secondary code is only used in the W-CDMA system.

The core network 10 is connected to the radio network controllers 100A, 100B. The core network 10 includes an exchange and the like.

The radio network controllers 100A, 100B execute control relating to radio communications executed between the radio base stations 200A to 200C and the mobile stations 300A, 300B.

The radio base stations 200A to 200C and the mobile stations 300A, 300B execute radio communications based on the CDMA.

### (2) Cell Configuration Example

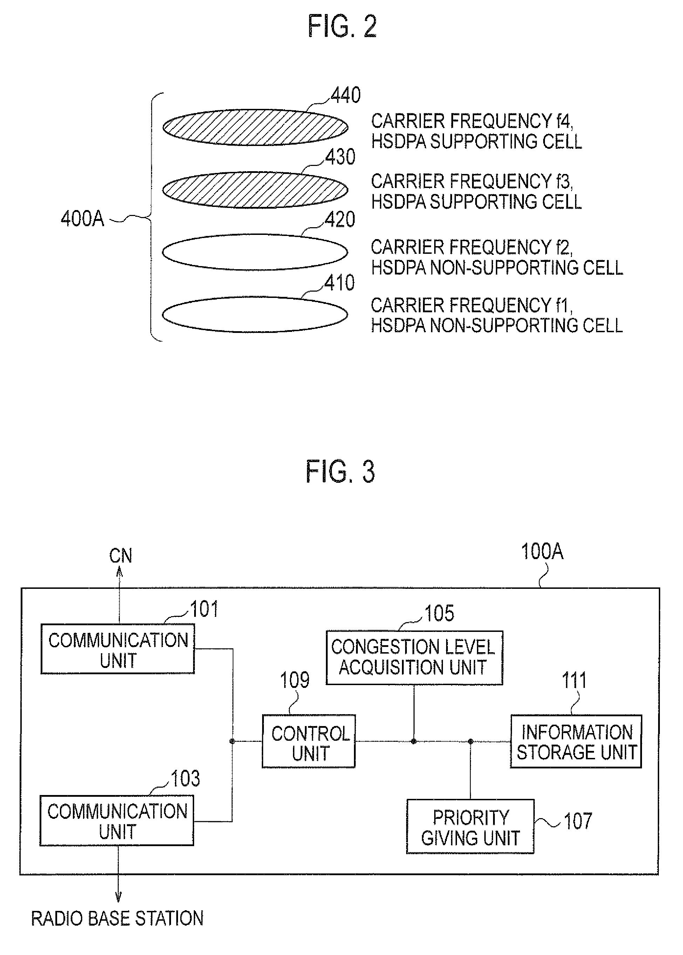

Fig. 2 shows a cell configuration example in the sector 400A. As shown in Fig. 2, in the sector 400A, the finite number of cells having carrier frequencies f1 to f4 different from one another is overlaid.

Specifically, in the sector 400A, four cells of cells 410, 420, 430, and 440 are overlaid. In the embodiment, the cell 410 using the carrier frequency f1 and the cell 420 using the carrier frequency f2 cannot be used in the DSDPA system and are cells supporting only the W-CDMA system (an HSDPA non-supporting cell). On the other hand, the cell 430 using the carrier frequency f3 and the cell 440 using the carrier frequency f4 are cells supporting both the W-CDMA system and the HSDPA system (an HSDPA supporting cell). In the embodiment, the HSDPA non-supporting cell configures a first cell type and the HSDPA supporting cell configures a second cell type.

The sectors 400B, 400C include the finite number of cells overlaid in one sector in the same manner as the sector 400A. However, the number of overlaid cells and the proportion of the HSDPA supporting cells to the HSDPA non-supporting cells included in the sector are not necessarily the same in all sectors.

### (3) Functional Block Configuration of Radio Network Controller

Fig. 3 is a functional block diagram of a radio network controller 100A. The radio network controller 100B also has a functional block configuration similar to that of the radio network controller 100A. In the following, the description is mainly given of portions relating to the present invention. Accordingly, it should be noted that the radio network controller 100A includes other blocks (a power source unit and the like) which are essential to achieve functions as a radio network controller 100A but is not shown in the figure or whose description is omitted.

As shown in Fig. 3, the radio network controller 100A includes a communication unit 101, a communication unit 103, a congestion level acquisition unit 105, a priority giving unit 107, a control unit 109, and an information storage unit 111.

The communication unit 101 provides a communication interface for executing communications through a core network 10. The communication unit 103 provides a communication interface for executing communications with the radio base stations 200A, 200B.

The congestion level acquisition unit 105 acquires a congestion level of a communication traffic which is handled in the cells in the sectors 400A to 400C. In the embodiment, the congestion level acquisition unit 105 periodically measures total transmission power (total downlink transmission power) which is being transmitted to a call based on the W-CDMA system and the HSDPA system in each cell, and determines a congestion level of the communication traffic by comparing the measured total transmission power with a predetermined determination threshold (determination thresholds T1 to T3).

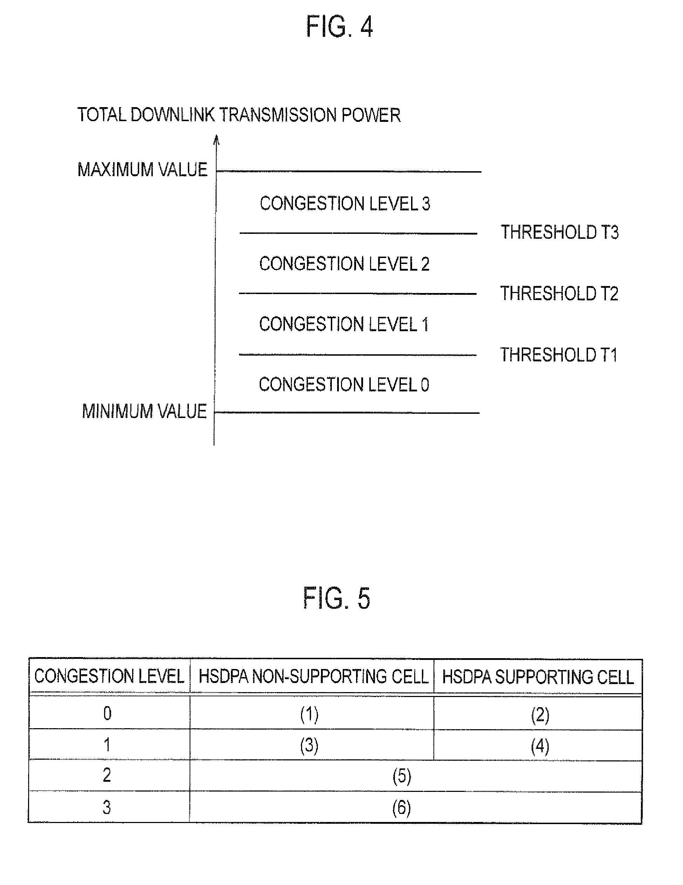

Fig. 4 shows an example of a relation among the total downlink transmission power, the determination threshold, and the congestion level. In the embodiment, when the total downlink transmission power is less than the determination threshold T1, it is determined that the congestion level is 0. When the total downlink transmission power is equal to or larger than the determination threshold T1 and is less than the determination threshold T2, it is determined that the congestion level is 1. When the total downlink transmission power is equal to or larger than the determination threshold T2 and less than the determination threshold T3, it is determined that the congestion level is 2. When the total downlink transmission power is equal to or larger than the determination threshold T3, it is determined that the congestion level is 3. In other words, the congestion level 0 means that the congestion degree of the communication traffic is the lowest, while the congestion level 3 means that the congestion degree is the highest. The determination thresholds T1 to T3 may be different values in the cells 410 to 440.

In other words, the congestion level acquisition unit 105 can determine a congestion level by using the determination threshold T2 (a predetermined threshold), the determination threshold T1 (a low congestion threshold) corresponding to the congestion level 1 whose congestion level is lower than the congestion level 2 (a predetermined congestion level) corresponding to the determination threshold T2, and the congestion level T3 (a high congestion threshold) corresponding to the congestion level 3 (a high congestion level) whose congestion level is higher than the congestion level 2.

Instead, the congestion level acquisition unit 105 can execute processing (first level determination processing) to determine a congestion level with the determination threshold T2 and the determination threshold T1 set to be equal to each other. The congestion level acquisition unit 105 can determine whether or not to execute the processing for each cell.

Alternatively, the congestion level acquisition unit 105 can execute processing (second level determination processing) to determine a congestion level with the determination threshold T3 and the determination threshold T2 set to be equal to each other. The congestion level acquisition unit 105 can determine whether or not to execute the processing for each cell.

The priority giving unit 107 gives a selection priority to a cell within the same sector according the congestion level acquired by the congestion level acquisition unit 105. Specifically, the priority giving unit 107 gives a higher selection priority as the congestion level becomes lower, on the basis of the congestion level acquired by the congestion level acquisition unit 105.

Fig. 5 shows a relation among the congestion level, the cell type, and the cell selection priority. The selection priorities of the cells applied to a call based on the W-CDMA system are shown by (1) to (6) in Fig. 5. A smaller number means a higher priority when selection is made.

As shown in Fig. 5, the priority giving unit 107 gives a selection priority whose order is high to the cell whose congestion level is low. Also, the priority giving unit 107 gives a higher selection priority to the HSDPA non-supporting cell than the selection priority given to the HSDPA supporting cell if the congestion level is less than the determination threshold T2 (the predetermine threshold), that is, if the congestion level is 0 and 1.

On the other hand, the priority giving unit 107 gives a same selection priority to the HSDPA non-supporting cell and the HSDPA supporting cell if the congestion level is equal to or larger than the determination threshold T2, that is, the congestion level is 2 and 3.

The control unit 109 executes control relating to radio communications which are executed between the radio base stations 200A, 200B and the mobile stations 300A, 300B. In particular, it is determined in the embodiment that a spreading code of which cell is allocated to a call based on the W-CDMA system and the HSDPA system.

Specifically, the control unit 109 selects a cell to be allocated to a call based on the W-CDMA system from the finite number of cells (the cells 410 to 440) which are overlaid in the sector 400A. More specifically, the control unit 109 selects a cell to be allocated to the call based on the W-CDMA system, according to the selection priorities given by the priority giving unit 107 to the cells 410 to 440.

The control unit 109 has a function to separately measure the number of spreading codes (primary codes) which are used as the W-CDMA system and the HSDPA system and calculate the total number of the measured spreading codes. If there are multiple cells whose selection priority is the same, the control unit 109 preferentially selects a cell with a smaller number in total of the number of spreading codes being used by the call in communication (the number of spreading codes in use) based on the W-CDMA system and the number of reserved spreading codes allocated to the HSDPA system.

In other words, in the sector 400A, the control unit 109 selects a cell whose selection priority given by the priority giving unit 107 is the highest among the cells having a spreading code allocated to the call based on the W-CDMA system. If there are multiple appropriate cells, the control unit 109 selects a cell whose number of spreading codes in use is the smallest (the number of codes available is the largest) and allocates the spreading code for the cell to the call.

The information storage unit 111 stores the determination thresholds T1 to T3 of the congestion levels of the cells used in the congestion level acquisition unit 105. Also, the information storage unit 111 stores the total number of spreading codes (primary codes) (the number of spreading codes in use) of each cell calculated by the control unit 109 and the congestion levels periodically acquired by the congestion level acquisition unit 105.

### (4) Operation of Radio Network Controller

In the following, the operation of the radio network controller 100A is described. Specifically, the description is given of a selection operation of a cell to be allocated by the radio network controller 100A to a call based on the W-CDMA system.

### (4.1) Overall operational flow

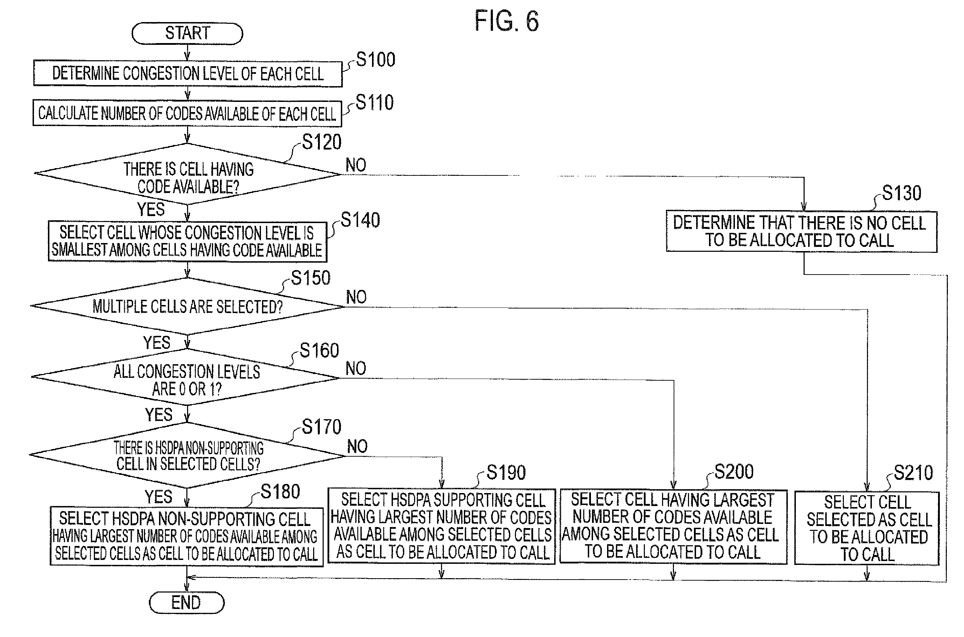

Fig. 6 shows an operational flow of selecting a cell to be allocated to a call based on the W-CDMA system by the radio network controller 100A. The operational flow shown in Fig. 6 is commonly used in operational examples 1 to 3 to be described later.

At step S100, the radio network controller 100A determines a congestion level of each cell. A specific method of determining a congestion level is described later.

At step S110, the radio network controller 100A calculates the number of codes available of each cell within a sector where a call is made based on the W-CDMA system.

If there is no code available (NO at step S120), the radio network controller 100A determines that there is no cell to be allocated to the call (step S130).

If there is a code available (YES at step S120), the radio network controller 100A selects a cell whose congestion level is the smallest among the cells having a code available (step S140).

If there is one cell selected (NO at step S150), the radio network controller 100A selects the selected cell as a cell to be allocated to the call (step S210).

If there are multiple cells selected (YES at step S150), the radio network controller 100A determines whether the congestion level of the selected cell is the congestion level 0 or the congestion level 1 (step S160).

If the congestion level of the selected cell is the congestion level 2 or the congestion level 3 (NO at step S160), the radio network controller 100A selects the cell whose number of codes available is the largest among the selected cells as a cell to be allocated to the call (step S200).

If the congestion level of the selected cell is the congestion level 0 or the congestion level 1 (YES at step S160), the radio network controller 100A determines whether there is an HSDPA non-supporting cell in the selected cells (step S170).

If there is no HSDPA non-supporting cell in the selected cells (NO at step S170), the radio network controller 100A selects the HSDPA supporting cell whose number of codes available is the largest among the selected cells as a cell to be allocated to the call (step S190).

If there is an HSDPA non-supporting cell in the selected cells (YES at step S170), the radio network controller 100A selects the HSDPA non-supporting cell whose number of codes available is the largest among the selected cells as a cell to be allocated to the call (step S180).

### (4.2) Operation of determining a congestion level

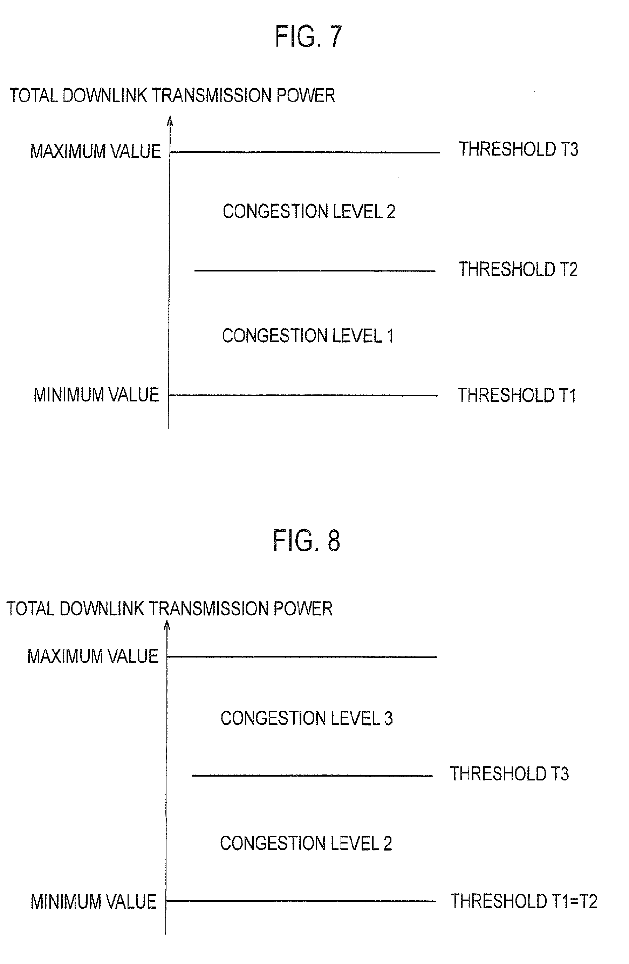

It is described in the following how the radio network controller 100A determines a congestion level. Specifically, the operational examples 1 to 3 are described by referring to Figs. 7 to 9.

### (4.2.1) Operational example 1

Fig. 7 shows the operational example 1 of determining a congestion level. In the operation of determining a congestion level, the determination thresholds T1 to T3 are set for all cells in the sector 400A where a call is made based on the W-CDMA system. In the present operational example, the determination threshold T1 is set as a value corresponding to the minimum value of total downlink transmission power, and the determination threshold T3 is set as a value corresponding to the maximum value of the total downlink transmission power. In addition, the determination threshold T2 is set as a value between the determination threshold T1 and the determination threshold T3.

The determination thresholds T1 to T3 are set as described above, so that a congestion level in each cell within the sector can take either value of the congestion level 1 or the congestion level 2. The radio network controller 100A executes the cell selection operation shown in Fig. 6 based on the congestion level 1 and the congestion level 2. In the case of the present operational example, the control is made so that any route in the operational flow shown in Fig. 6 is possible.

### (4.2.2) Operational example 2

Fig. 8 shows the operational example 2 of determining a congestion level. In the present operational example, the determination threshold T1 and the determination threshold T2 are set as a value corresponding to the minimum value of the total downlink transmission power, and the determination threshold T3 is set as a value corresponding to a value between the maximum value and the minimum value of the total downlink transmission power. In other words, the determination threshold T1 and the determination threshold T2 are set as the same value.

The determination thresholds are set as described above, so that a congestion level in each cell within the sector can take either value of the congestion level 2 or the congestion level 3. In the case of the operational example, the determination made at step S160 is always NO in the operational flow shown in Fig. 6. Thus, the cell having a lower congestion level has a priority. However, when the congestion levels are the same, a priority is given neither to the HSDPA non-supporting cell nor to the HSDPA supporting cell.

### (4.2.3) Operational example 3

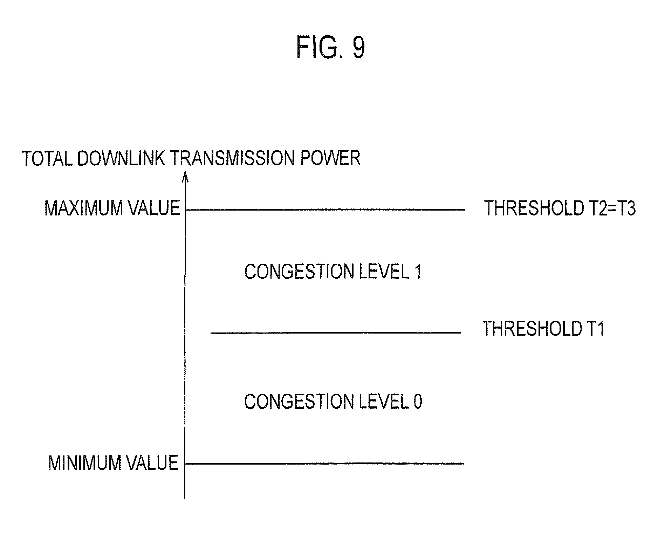

Fig. 9 shows the operational example 3 of determining a congestion level. In the present operational example, the determination threshold T2 and the determination threshold T3 are set as a value corresponding to the maximum value of the total downlink transmission power, and the determination threshold T1 is set as a value corresponding to a value between the maximum value and the minimum value of the total downlink transmission power. In other words, the determination threshold T2 and the determination threshold T3 are set as the same value.

The determination thresholds are set as described above, so that a congestion level in each cell within the sector can take either value of the congestion level 0 or the congestion level 1. In the case of the operational example, the determination made at step S160 is always YES in the operational flow shown in Fig. 6. Thus, the cell having a lower congestion level has a priority. When the congestion levels are the same, a higher priority is always given to the HSDPA non-supporting cell than the HSDPA supporting cell.

### (5) Advantageous Effects

The radio network controller 100A (100B) preferentially selects an HSDPA non-supporting cell among cells having a same congestion level if the congestion level acquired by the congestion level acquisition unit 105 is less than a predetermined level. For this reason, it becomes difficult to allocate a spreading code for an HSDPA supporting cell to a call based on the W-CDMA system. Accordingly, a situation is likely to arise where a spreading code or total downlink transmission power for the HSDPA supporting cell can be used only in a call based on the HSDPA system. In other words, throughput of a call based on the HSDPA system can be prevented from being decreased.

In addition, the HSDPA non-supporting cell and the HSDPA supporting cell are handled to have a same selection priority if the congestion levels are equal to or larger than a predetermined level and the congestion levels are the same. Thus both cells are selected as cells in which a spreading code is allocated to a call based on the W-CDMA system. For this reason, the HSDPA non-supporting cell and the HSDPA supporting cell are kept so as to maintain the same congestion level while a spreading code can be allocated to a call based on the W-CDMA system. Consequently, interference among users capable of using only the W-CDMA system is prevented from occurring only in the HSDPA non-supporting cell and is distributed to the HSDPA supporting cell as well. This prevents deterioration in voice quality of a call based on the W-CDMA system and also prevents disconnection of communications thereof.

In the embodiment, the radio network controller 100A follows the foregoing operational example 1. Accordingly, if all cells within a sector where a call is made based on the W-CDMA system have the congestion level 1, that is, if communication traffic within the sector is equally low, a call based on the W-CDMA system is not allocated to an HSDPA supporting cell. Thus, the HSDPA supporting cell can be used only by a call based on the HSDPA system. For this reason, when the communication traffic is at off-peak, high throughput of the call based on the HSDPA system can be maintained.

On the other hand, if communication traffic is not equal among cells, for example, in a case where the HSDPA supporting cell has the congestion level 1 but there appears an HSDPA non-supporting cell having the congestion level 2, a call based on the W-CDMA system is allocated to the HSDPA supporting cell having the congestion level 1. For this reason, the throughput of the call based on the HSDPA system is decreased. However, a call based on the W-CDMA system is no longer allocated to the HSDPA non-supporting cell having the congestion level 2 in which the communication traffic has been already congested. Thus, interference among users of the call based on the W-CDMA system can be prevented in the HSDPA non-supporting cell. In other words, calls based on the W-CDMA system are prevented from having voice quality deterioration and disconnection of communications thereof.

In addition, if all cells within the sector have the congestion level 2, that is, if the communication traffic within the sector is equally high, the HSDPA supporting cell and the HSDPA non-supporting cell are handled as cells having a same selection priority. Thus, the call based on the W-CDMA system is allocated so that the communication traffics of the both cells are leveled. Thus, it is possible to maintain the effects of preventing the calls based on the W-CDMA system from having voice quality deterioration and disconnection of communications thereof.

In the present embodiment, the radio network controller 100A follows the foregoing operational example 2. Accordingly, not only in a case where all cells within a sector where a call is made based on the W-CDMA system have the congestion level 3 but also in the case where the cells have the congestion level 2, that is, in a case where the communication traffic within the sector is equally low, the call based on the W-CDMA system is also allocated to the HSDPA supporting cell. Thus, the call based on the W-CDMA system is always allocated so as to level the congestion levels. As compared with the operational example 1, the throughput of the call based on the HSDPA system is not maintained. However, if interference among users of the call based on the W-CDMA system is desired to be preferentially decreased, only needed is to change the determination threshold of the congestion level. Then, the operation of the operational example 2 becomes possible by using the same operation flow as that of the operational example 1.

Moreover, the radio network controller 100A follows the foregoing operational example 3. Accordingly, if all cells within a sector where a call is made based on the W-CDMA system have the congestion level 0, that is, if communication traffic within the sector is equally low, the call based on the W-CDMA system is not allocated to the HSDPA supporting cell. Thus, the HSDPA supporting cell is only used by a call based on the HSDPA system. For this reason, the throughput of the call based on the HSDPA system can be maintained when the communication traffic is at off-peak.

On the other hand, if there arises a case where imbalance of communication traffic such as a case where the HSDPA supporting cell has the congestion level 0 but there appears the HSDPA non-supporting cell having the congestion level 1, a call based on the W-CDMA system is allocated to the HSDPA supporting cell having the congestion level 0. For this reason, the throughput of the call based on the HSDPA system is decreased. However, the call based on the W-CDMA system is no longer allocated to the HSDPA non-supporting cell having the congestion level 1 in which the communication traffic has been already congested. Thus, interference among users of the call based on the W-CDMA system can be prevented in the HSDPA non-supporting cell. In other words, the call based on the W-CDMA system can be prevented from having voice quality deterioration and disconnection of communications thereof.

Moreover, if all cells within the sector have the congestion level 1, that is, if the communication traffic is equally high within the sector, the call based on the W-CDMA system is not allocated again to the HSDPA supporting cell. Thus, the throughput of the call based on the HSDPA system can be prevented from being further deteriorated. As compared with the operational example 1, if the communication traffics of all the cells are equally high, the interference among users of the call based on the W-CDMA system is not prevented in the HSDPA non-supporting cell. However, if the deterioration of the throughput of the call based on the HSDPA system is desired to be preferentially prevented, all needed is only to change the determination threshold of the congestion level. Then, the operation of the operational example 3 becomes possible by using the same operation flow as that of the operational example 1.

In other words, in the mobile communication system using a code division multiple access system in which multiple communication systems having different methods of allocating a spreading code are used together, the radio network controller 100A can improve the throughput of the entire system and can prevent deterioration in voice quality and disconnection of communications.

### (6) Other Embodiments

As described above, the details of the present invention have been disclosed by using the embodiment of the present invention. However, it should not be understood that the description and drawings which constitute part of this disclosure limit the present invention. From this disclosure, various alternative embodiments, examples, and operation techniques will be easily found by those skilled in the art.

For example, in the foregoing embodiment, the radio network controller 100A executes the cell selection operation. However, the operation may be performed by the radio base stations 200A to 200C or an exchanger provided in the core network 10.

Also, the application of the present invention is not limited to the W-CDMA system and the HSDPA system. Furthermore, in the foregoing embodiment, the description is given of the example where a primary code is used for the W-CDMA system and the HSDPA system. However, the present invention can be applied to a case where a secondary code is used for the W-CDMA system.

As described above, the present invention naturally includes various embodiments which are not described herein. Accordingly, the technical scope of the present invention should be determined only by the matters to define the invention in the scope of claims regarded as appropriate based on the description.

Note that the entire content of Japanese Patent Application No. 2008-254376 (filed on September 30, 2008) is incorporated herein by reference.

### INDUSTRIAL APPLICABILITY

As described above, according to a cell selection method and a controller according to the present invention, in a mobile communication system using a code division multiple access system in which multiple communications systems each having a different method of allocating a spreading code are used together, it is possible to provide a cell selection method and a controller allowing the system to improve the entire throughput while preventing deterioration in voice quality and disconnection of communications.

## Claims

1. A cell selection method in which
a first communication system in which a spreading code selected from a finite number of spreading codes is allocated every time a call is made by a radio communication device included in a mobile communication system using the finite number of spreading codes for a code division multiple access, is used together with
a second communication system in which a plurality of spreading codes selected from the finite number of spreading codes are allocated in advance as reserved spreading codes and a number of the spreading codes which are allocated to the call at regular time intervals from the reserved spreading codes is changed according to a required communication quality,
a finite number of cells using different carrier frequencies are overlaid in a geographically same area, and
a first cell type usable only for the first communication system and a second cell type usable for both the first communication system and the second communication system are used together as types of the cells, and a cell to be allocated to a call based on the first communication system is selected from the finite number of overlaid cells, the cell selection method comprising the steps of:
acquiring a congestion level of communication traffic which is handled in each of the finite number of overlaid cells;
giving a higher selection priority to a cell having a lower congestion level on the basis of the congestion level acquired in the step of acquiring the congestion level; and
selecting a cell to be allocated to a call based on the first communication system, according to the selection priority, wherein
in the step of giving the selection priority,
a higher selection priority is given to a cell of the first cell type than a cell of the second cell type if the congestion levels thereof are less than a predetermined threshold, and
a same selection priority is given to a cell of the first cell type and a cell of the second cell type if the congestion levels thereof are equal to or larger than the predetermined threshold.

2. The cell selection method according to claim 1, wherein
in the step of selecting the cell, if there is a plurality of cells having the same selection priority, a selection priority is given to a cell in ascending order of a total number of the spreading codes being used by a call in communication based on the first communication system and the reserved spreading codes allocated to the second communication system.

3. The cell selection method according to claim 1, wherein in the step of acquiring the congestion level,
the congestion level is determined by using the predetermined threshold,
a low congestion threshold corresponding to a low congestion level whose congestion level is lower than a predetermined congestion level corresponding to the predetermined threshold, and
a high congestion threshold corresponding to a high congestion level whose congestion level is higher than the predetermined congestion level.

4. The cell selection method according to claim 3, wherein
in the step of acquiring the congestion level, a first level determination processing is executed to determine the congestion level with the predetermined threshold and the low congestion threshold set to be equal to each other.

5. The cell selection method according to claim 3, wherein
in the step of acquiring the congestion level, a second level determination processing is executed to determine the congestion level with the predetermined threshold and the high congestion threshold set to be equal to each other.

6. The cell selection method according to claim 4, wherein
in the step of acquiring the congestion level, whether or not to execute the first level determination processing is determined for each cell.

7. The cell selection method according to claim 5, wherein
in the step of acquiring the congestion level, whether or not to execute the second level determination processing is determined for each cell.

8. A controller in which
a first communication system in which a spreading code selected from a finite number of spreading codes is allocated every time a call is made by a radio communication device included in a mobile communication system using the finite number of spreading codes for a code division multiple access, is used together with
a second communication system in which a plurality of spreading codes selected from the finite number of spreading codes are allocated in advance as reserved spreading codes and a number of the spreading codes which are allocated to the call at regular time intervals from the reserved spreading codes is changed according to a required communication quality,
a finite number of cells using different carrier frequencies are overlaid in a geographically same area, and
a first cell type usable only for the first communication system and a second cell type usable for both the first communication system and the second communication system are used together as types of the cells, and a cell to be allocated to a call based on the first communication system is selected from the finite number of overlaid cells, the controller comprising:
a congestion level acquisition unit configured to acquire a congestion level of communication traffic which is handled in each of the finite number of overlaid cells;
a priority giving unit configured to give a higher selection priority to a cell having a lower congestion level on the basis of the congestion level acquired by the congestion level acquisition unit; and
a control unit configured to select a cell to be allocated to a call based on the first communication system, according to the selection priority given by the priority giving unit, wherein
the priority giving unit
gives a higher selection priority to a cell of the first cell type than a cell of the second cell type if the congestion levels thereof are less than a predetermined threshold, and
gives a same selection priority to a cell of the first cell type and a cell of the second cell type if the congestion levels thereof are equal to or larger than the predetermined threshold.

9. The controller according to claim 8, wherein
if there is a plurality of cells having the same selection priority, the control unit preferentially selects a cell having the smallest total number of the spreading codes being used by a call in communication based on the first communication system and the reserved spreading codes allocated to the second communication system.

10. The controller according to claim 8, wherein
the congestion level acquisition unit determines the congestion level by using
the predetermined threshold,
a low congestion threshold corresponding to a low congestion level whose congestion level is lower than a predetermined congestion level corresponding to the predetermined threshold, and
a high congestion threshold corresponding to a high congestion level whose congestion level is higher than the predetermined congestion level.

11. The controller according to claim 10, wherein
the congestion level acquisition unit executes a first level determination processing of determining the congestion level with the predetermined threshold and the low congestion threshold set to be equal to each other.

12. The controller according to claim 10, wherein
the congestion level acquisition unit executes a second level determination processing of determining the congestion level with the predetermined threshold and the high congestion threshold set to be equal to each other.

13. The controller according to claim 11, wherein
the congestion level acquisition unit determines whether or not to execute the first level determination processing for each cell.

14. The controller according to claim 12, wherein
the congestion level acquisition unit determines whether or not to execute the second level determination processing for each cell.
